# EUROPÄISCHE PATENTSCHRIFT

(11) **EP 0 367 991 B1**
(45) Veröffentlichungstag und Bekanntmachung des Hinweises auf die Patenterteilung: **16.03.1994**
(21) Anmeldenummer: 89118478.0
(22) Anmeldetag: 05.10.1989
(51) Int. Cl.: C09D 5/44

(54) **Bindemittelkombinationen für kathodisch abscheidbare Lacke**
Binder compositions for cathodically depositable paints
Combinaisons de liants pour peintures déposables à la cathode

(30) Priorität: 13.10.1988 AT 2532/88
(43) Veröffentlichungstag der Anmeldung: 16.05.1990
(73) Patentinhaber: Vianova Kunstharz Aktiengesellschaft, A-8402 Werndorf (AT)
(72) Erfinder: Paar, Willibald, Dr., A-8010 Graz (AT); Gmoser, Johann, A-8045 Graz (AT)

(56) Entgegenhaltungen:
- EP-A- 0 044 816
- EP-A- 0 279 198
- US-A- 4 522 986

## Beschreibung

Die Erfindung betrifft Bindemittelkombinationen für kathodisch abscheidbare Lacke, welche zur Verbesserung der Abscheidungscharakteristik, insbesonders zur Erhöhung der erzielbaren Schichtstärke, eine Zusatzkomponente auf der Basis von polyethermodifizierten Aminoverbindungen enthalten.

Für eine Erhöhung der Schichtstärken bei der Elektrotauchlackierung von als Kathode geschalteten Werkstükken besteht ein großes Interesse, insbesondere seitens der Automobilindustrie, da man erwartet, bei Vorliegen geeigneter Materialien auf die bisher zwischen Grundierung und Decklackierung aufgebrachte Füllerschicht verzichten zu können.

Dafür geeignete Produkte müssen neben den erreichbaren höheren Schichtstärken jedoch dieselbe günstige Umgriffscharakteristik und die Ausbildung störungsfreier Oberflächen aufweisen, wie dies bei Produkten, mit welchen nur niedrige Schichtstärken zu erzielen sind, der Fall ist.

Mit den vorhandenen Materalien lassen sich die diesbezüglichen Forderungen der Verbraucher nur in unzureichendem Maße realisieren, da die von der Anlagentechnik gegebenen Möglichkeiten für eine Erhöhung der Schichtstärken nicht zum gewünschten Ergebnis führen. Eine willkürliche Erhöhung der Abscheidungsspannung führt zu Oberflächenstörungen durch sogenannte Durchbrüche, d.h. durch elektrolytische Effekte beim Überschreiten der für das Bindemittel maximal zulässigen Arbeitsspannung. Eine Verlängerung der Beschichtungszeit ist meist aus Gründen des Arbeitsablaufes im Fließbandbetrieb nicht möglich. Diese Methode ist auch deswegen nicht zielführend, da bekanntlich bei der Elektrobeschichtung durch den Aufbau eines Filmwiderstandes eine automatische Begrenzung der Filmstärke eintritt.

Man hat daher versucht, durch Zusätze zum Elektrotauchlack die Schichtstärke zu beeinflussen. Bis zu einem bestimmten Ausmaß ist dies durch Kombination der Bindemittel mit höhermolekularen wasserunlöslichen Komponenten möglich, doch werden damit nur die für die kathodische Abscheidung charakteristischen sehr niedrigen Schichtstärken von 8 bis 14 µm ohne Verschlechterung der Filmeigenschaften auf die als Standard für eine Grundierung im Dreischichtaufbau erwünschten 18 bis 22 µm erhöht. Solche Bindemittelkombinationen werden beispielsweise in der EP-B1-00 28 402 angeführt. Dieser Effekt kann auch durch andere, unter den Bedingungen des K-ETL-Verfahrens praktisch wasserunlösliche Zumischkomponenten, z. B. auf Basis von Oxazolidinverbindungen, erzielt werden, wie dies in der AT-PS 377.775 beschrieben wird. Schichtstärken von 30 bis 50 µm sind auch mit diesen Modifikationen nicht zu erreichen.

In der EP-A1-00 59 468 werden Zusätze zur Erhöhung der Schichtstärken auf Basis von quartären Ammoniumsalzen, z. B. Methyldodecylbenzyltrimethylammoniumchlorid, Methyldodecylxylylen-bis-trimethylammoniumacetat u. ä. beschrieben. Die Wirkung der Zusätze liegt im wesentlichen in einer Erhöhung der Filmleitfähigkeit (oder einer Herabsetzung des Filmwiderstandes). Da jede Änderung des Filmwiderstandes Einfluß auf den Umgriff, d.h. auf die Beschichtung elektrisch abgeschirmter Stellen des Werkstücks, hat, bedarf ein Zusatz dieser Art einer besonders sorgfältigen Badüberwachung.

Eine weitere Methode zur Anhebung der erzielbaren Filmstärken besteht in der Zugabe von schwerflüchtigen, wasserunlöslichen, organischen Lösungsmitteln, beispielsweise dem Ethylenglykolmonohexylether. Durch diese Zusätze wird der Dispersionscharakter des Badmaterials verändert, wodurch ebenfalls der Filmwiderstand beeinflußt wird. Bei der großen Oberfläche der Elektrotauchlackierbecken ist jedoch ein Verdampfen dieser Zusätze trotz deren hoher Siedepunkte nicht zu vermeiden, wodurch Schwankungen bei der Beschichtung ohne besonderen Kontrollaufwand kaum vermieden werden können. Überdies wird durch Zusätze dieser Art die Stabilität der Badmaterialien negativ beeinflußt und die optimale Abscheidungsspannung herabgesetzt.

In der AT-PS 380.266 wird ein Zusatz von 3 bis 20 Gew.-% einer relativ niedrigmolekularen Oxazolidinverbindung vorgeschlagen, wodurch eine Erhöhung der Schichtstärke unter gleichzeitiger Verbesserung des Umgriffs und Beibehaltung der Oberflächenqualität erreicht wird.

Es wurde nun gefunden, daß dieser Effekt auch bei Bindemittelkombinationen erzielt wird, welche neben dem Basisharz 3 bis 20 Gew.-%, vorzugsweise 5 bis 15 Gew.-%, einer polyethermodifizierten Aminoverbindung enthalten.

Die vorliegende Erfindung betrifft demgemäß Bindemittelkombinationen für kathodisch abscheidbare Lacke, bestehend aus
(A) 80 bis 97 Gew.-%, vorzugsweise 85 bis 95 Gew.-%, eines kationischen, nach Protonierung wasserverdünnbaren, filmbildenden Harzes und
(B) 3 bis 20 Gew.-%, vorzugsweise 5 bis 15 Gew.-%, einer polyethermodifizierten Aminoverbindung, die durch
(B1) Umsetzung einer aliphatische Polyethersegmente enthaltenden Diepoxidverbindung mit mindestens 1 Mol eines primären oder sekundären Alkanolamins oder
(B2) Umsetzung von n Mol eines aliphatischen Polyetherdiols mit n+1 Mol eines Diisocyanates und 2 Mol eines Trialkanolamins erhalten wurde,
mit der Maßgabe, daß die Komponente (B) einen Anteil an Polyethersegmenten von mindestens 20 Gew.-%, vorzugsweise von 30 bis 80 Gew.-%, enthält und eine Aminzahl von 50 bis 180 mg KOH/g, eine Hydroxylzahl von 100 bis 650 mg KOH/g und ein mittleres Molekulargewicht von 500 bis 2000 aufweist.

Es hat sich gezeigt, daß mit Hilfe der erfindungsgemäß eingesetzten Zusatzkomponente (B) bei den bekannten kationischen Bindemittelsystemen, die nach Protonierung ihrer basischen Gruppen in einer wasserverdünnbaren Form vorliegen, eine wesentliche und regulierbare Erhöhung der Schichtstärke der elektrisch abgeschiedenen Filme erreicht wird, wobei durch den Zusatz keine Verschlechterung des Umgriffes und der Oberflächenqualität sowie der mechanischen Eigenschaften und der chemischen Beständigkeit erfolgt.

Als Komponente (A), d. h. als Basisharz, welches als wesentlicher Filmbildner die Grundeigenschaften des Elektrotauchlackes bestimmt, können die für dieses Verfahren bekannten, nach Protonierung wasserverdünnbaren Bindemittel auf der Basis von Copolymerisaten, Polykondensaten oder Polyadditionsprodukten eingesetzt werden.

Diese Bindemittel, für deren Herstellung und Verwendung durch diese Anmeldung kein Schutz begehrt wird, sind in der Literatur in großer Anzahl beschrieben. Zusammenfassende Hinweise sind beispielsweise in R.H.CHANDLER, "Advances in Electropainting", Bibliographies in Paint Technology, No 23, March 1975 oder No 36, March 1981 zu finden. Die Bindemittel können durch verschiedene Vernetzungssysteme, wie thermische Polymerisation, Umesterung, Umurethanisierung oder durch Amino- oder Phenolharze gehärtet werden.

Die polyethermodifizierte Aminoverbindung (B), ist entweder ein Umsetzungsprodukt aus einer Polyethersegmente enthaltenden Diepoxidverbindung mit mindestens 1 Mol eines primären oder sekundären Alkanolamins (Komponente B1) oder ein Umsetzungsprodukt aus n Mol eines Polyetherdiols mit n+1 Mol eines Diisocyanates und 2 Mol eines Trialkanolamins (Komponente B2). Die Komponente (B) muß einen Anteil an Polyethersegmenten von mindestens 20 Gew.-% aufweisen, vorzugsweise beträgt der Polyetheranteil 30 bis 80 Gew.-%. Weiters ist diese Komponente durch eine Aminzahl von 50 bis 180 mg KOH/g, eine Hydroxylzahl von 100 bis 650 mg KOH/g und ein mittleres Molekulargewicht von 500 bis 2000 gekennzeichnet.

Die für die Komponente (B1) eingesetzten, Polyethersegmente enthaltenden Diepoxidverbindungen, sind vorzugsweise handelsübliche Polyglykoletherdiepoxide, die gegebenenfalls mit anderen Diepoxidverbindungen oder Phenolen kettenverlängert und/oder teilweise defunktionalisiert sein können.

Als primäre oder sekundäre Alkanolamine werden das Diethanolamin bzw. das Monoethanolamin, sowie deren homologe Verbindungen eingesetzt. Beim Einsatz der primären Alkanolamine erfolgt naturgemäß eine Kettenverlängerung.

Als Diisocyanate für die Herstellung der Komponente (B2) werden vorzugsweise aliphatische Diisocyanate, wie das Hexamethylendiisocyanat oder homologe Verbindungen eingesetzt. Es können aber auch Umsetzungsprodukte von aliphatischen Diolen mit aromatischen Diisocyanaten verwendet werden. Solche Vorprodukte können beispielsweise durch Umsetzung von einem Mol 1,6-Hexandiol mit 2 Mol Toluylendiisocyanat erhalten werden.

Das Polyethersegment dieser Komponente wird durch ein aliphatisches Polyetherdiol gebildet. Vorzugsweise werden dafür die verschiedenen Polyalkylenglykole, wie Polyethylenglykole, Polypropylenglykole oder Polytetrahydrofurane mit verschiedener Kettenlänge, eingesetzt.

Die Amino- bzw. Hydroxylfunktionen werden bei dieser Komponente durch Trialkanolamine, wie Triethanolamin oder Triisopropanolamin, eingeführt.

Die Herstellung der Epoxidharz-Alkanolamin-Addukte (B1) erfolgt in der üblichen Weise durch Zugabe des Alkanolamins zu einer Lösung der Epoxidverbindung bei 60 bis 120°C, gegebenenfalls in Gegenwart eines reaktionsinerten, vorzugsweise wasserverträglichen Lösemittels.

Bei der Herstellung der Komponente (B2) werden entweder die Reaktionspartner gemeinsam bei 50 bis 70°C bis zur vollständigen Umsetzung der Isocyanatgruppen reagiert oder in einer ersten Stufe bei 30 bis 40°C ein durch ein Polyglykolsegment verlängertes Diisocyanatvorprodukt hergestellt, welches weiter bei 50°C mit dem Trialkanolamin umgesetzt wird.

Die Herstellung der Bindemittelkombinationen erfolgt in der Form, daß die Komponente (A) nach Neutralisation mit geeigneten Säuren, wie Ameisen- oder Essigsäure, in eine 35 - 50 %ige wäßrige Emulsion überführt wird. Zu dieser Emulsion wird unter Rühren bei 25 - 50°C die Komponente (B) (ohne vorhergehende Neutralisation ihrer basischen Gruppen) zugesetzt. Die Mischung wird anschließend 1 - 3 Stunden homogenisiert. Zur Einstellung einer geeigneten Klarlackviskosität kann anschließend noch Wasser zugesetzt werden. Die Zusatzkomponente wird in einer Menge von 3 bis 20 Gew.%, vorzugsweise 5 - 15 Gew.%, eingesetzt, wobei die Prozentzahlen auf den Feststoffanteil der Kombination bezogen sind.

Die Bindemittel können vor oder nach der Neutralisation bzw. in Gegenwart anteiliger Mengen von Hilfslösungsmitteln, wie Glykolethern oder Ketonen oder von Wasser, in bekannter Weise mit Pigmenten oder Füllstoffen verarbeitet werden.

Die Herstellung der Badmaterialien für die Elektrotauchlackierung bzw. die Verarbeitung der Lacke im Elektrotauchlackierverfahren zur Beschichtung leitfähiger Werkstücke sind dem Fachmann bekannt und in vielen Literaturstellen beschrieben.

Die folgenden Beispiele erläutern die Erfindung, ohne sie in ihrem Umfang zu beschränken. Alle Angaben in Teilen oder Prozenten beziehen sich, soweit nicht anders angegeben, auf Gewichtseinheiten. Die Abkürzung EEW bedeutet Epoxid-Äquivalentgewicht, d.h. die eine Epoxidgruppe enthaltende Menge (in Gramm) eines Epoxidharzes.

### Herstellung der in den Beispielen eingesetzten kationischen filmbildenden Harze (Komponente A).

Komponente (A1): 500 Tle eines Epoxidharzes auf Basis von Bisphenol A (EEW ca. 500) werden in 214 Tlen Propylenglykolmonomethylether gelöst und bei 110°C mit 83 Tlen eines Halbesters aus Phthalsäureanhydrid und 2-Ethylhexanol in Gegenwart von 0,5 Tlen Triethylamin als Katalysator bis zu einer Säurezahl von weniger als 3 mg KOH/g reagiert. Dann werden 120 Tle eines NH-funktionellen Oxazolidins aus Aminoethylethanolamin, 2-Ethylhexylacrylat und Formaldehyd, sowie 26 Tle Diethylaminopropylamin zugefügt und der Ansatz bei 80°C bis zu einem Epoxidwert von praktisch 0 reagiert. Der Ansatz wird mit 200 Tlen Propylenglykolmonomethylether verdünnt und mit 97 Tlen 3-n Ameisensäure partiell neutralisiert. Der resultierende Festkörpergehalt des Produktes beträgt 58,8 %.

Das Harz wird in einem Feststoffverhältnis von 80 : 20 mit einem Umesterungshärter, welcher in der nachstehenden Weise hergestellt wurde, und 0,5 % Bleioctoat (berechnet als Metall und bezogen auf die Summe der Komponenten) gemischt. Die so hergestellte Komponente (A1) weist einen Festkörpergehalt von 64 % auf.

Herstellung des Umesterungshärters: Zu einer Mischung aus 160 Tlen Malonsäurediethylester, 0,85 Tlen Piperidin und 0,54 Tlen Ameisensäure (85 %) werden bei 70°C 33 Tle Paraformaldehyd (91 %) portionsweise in der Weise zugegeben, daß durch die einsetzende exotherme Reaktion die Temperatur nicht über 90°C ansteigt. Das Reaktionsgemisch wird bei 90°C weitergerührt, bis der Paraformaldehyd vollständig gelöst ist. Die Temperatur wird unter einsetzender Wasserabspaltung innerhalb von 2 Stunden auf 140°C erhöht. Nach Erreichen von 140°C werden mit Spezialbenzin (Siedebereich 80 - 120°C) als Schleppmittel insgesamt 24 Tle Wasser abdestilliert. Unter Anlegen von Vakuum wird anschließend das eingesetzte Schleppmittel abdestilliert und der Ansatz solange bei 120°C gehalten, bis die angegebene Viskosität bzw. der Brechungsindex erreicht sind.

Das erhaltene Produkt weist einen Festkörpergehalt (120°C, 30 Minuten) von 97 ± 1 % auf. Die Viskosität nach GARDNER-HOLDT einer Probe aus 9 g Harzlösung und 1 g Ethylglykol beträgt M. Der Gehalt an freiem Formaldehyd liegt unter 1,5 % und die Bestimmung des Brechungsindex ergibt einen Wert von nD/20 = 1,4560. Die Verbindung hat ein mittleres Molekulargewicht von ca. 500. Die Esterfunktionalität beträgt 6 Esteräquivalente pro Mol bzw. 1,17 Esteräquivalente pro 100 g des Produktes.

Komponente (A2): In 448 Tlen Propylenglykolmonomethylether werden 1000 Tle eines Epoxidharzes auf Basis von Bisphenol A (EEW ca. 500) und 760 Tle eines Epoxidharzes auf Basis von Bisphenol A (EEW ca. 190) bei 70°C mit 616 Tlen eines Umsetzungsproduktes aus 1 Mol Hexamethylendiamin und 2 Mol eines technischen Gemisches von 1,1-Dimethyl-(C₇ - C₉)-alkancarbonsäuren sowie 210 Tlen Diethanolamin bis zur vollständigen Bindung der Amine umgesetzt. Anschließend werden 130 Tle Diethylaminopropylamin zugesetzt und der Ansatz bei 75°C bis zu einem Epoxidwert von 0 reagiert und mit 1000 Tlen Propylenglykolmonomethylether verdünnt.

Das Harz wird mit dem in der Komponente (A1) verwendeten Umesterungshärter im Feststoffverhältnis 80 : 20 gemischt und mit 0,5 % Bleioctoat (berechnet als Metall und bezogen auf die Summe der Komponenten) versetzt. Das Bindemittel ist nach Neutralisation mit 35 mMol Ameisensäure pro 100 g Festharz in deionisiertem Wasser löslich.

Komponente (A3): Ein selbstvernetzendes, durch thermische Polymerisation härtbares Bindemittel wird wie folgt hergestellt:

520 Tle eines Epoxidharzes auf Bisphenol-A Basis (EEW ca. 260) werden in 465 Tle Ethylglykolacetat gelöst und bei 120°C mit 564 Tlen eines Halbesters aus Tetrahydrophthalsäureanhydrid und Hydroxyethylmethacrylat bis zu einer Säurezahl von weniger als 3 mg KOH/g umgesetzt. Das Reaktionsprodukt wird weiter mit 750 Tlen eines basischen Monoisocyanats (hergestellt aus equimolaren Mengen Toluylendiisocyanat und Diethylethanolamin) (70 % in Ethylglykolacetat) bei 60 - 65°C umgesetzt, bis der Gehalt an freien Isocyanatgruppen Null beträgt. Das Harz ist nach Neutralisation mit 45 mMol Ameisensäure pro 100 g Festharz in Wasser löslich.

Komponente (A4): Dieses Bindemittel stellt ein durch Umurethanisierung härtbares Material dar und wurde gemäß den Angaben der DE-PS 22 52 536 (Beispiel 1) hergestellt.

### Herstellung der in den Beispielen eingesetzten Zusatzkomponenten (Komponente B)

Komponente (B 1a): 640 Tle eines Epoxidharzes auf Basis Polypropylenglykol (EEW ca. 320) werden mit 210 Tlen (2 Mol) Diethanolamin bei 80 - 100°C bis zum vollständigen Verbrauch aller Epoxidgruppen umgesetzt.

Komponente (B 1b): 190 Tle eines Bisphenol A-Diglycidylethers (EEW ca. 190) und 200 Tle eines Epoxidharzes auf Basis Polypropylenglykol (EEW ca. 200) werden mit 114 Tlen (0,5 Mol) Bisphenol A und 133 Tlen (1,0 Mol) Diisopropanolamin bei 120°C bis zum vollständigen Verbrauch aller Epoxidgruppen reagiert.

Komponente (B 2a): 1000 Tle eines Polypropylenglykol (OH-Zahl = 112 mg KOH/g) werden mit 348 Tlen (2,0 Mol) eines 2,4-Toluylendiisocyanates und 298 Tlen (2,0 Mol) Triethanolamin gemischt und bei 60°C gehalten, bis alle Isocyanatgruppen verbraucht sind.

Komponente (B 2b): Aus 400 Tlen Polyethylenglykol (OH-Zahl = 280 mg KOH/g) und 420 Tlen (2,0 Mol) Trimethylhexamethylendiisocyanat wird bei 30 - 40°C ein polyglykolfunktionelles Diisocyanat gefertigt (Gehalt an freien Isocyanatgruppen = 10,2 Gew.-%) Die weitere Umsetzung erfolgt mit 382 Tlen (2,0 Mol) Triisopropanolamin bei 50°C bis zum vollständigen Verbrauch aller Isocyanatgruppen.

Die nach obigen Angaben hergestellten Komponenten weisen folgende Kennwerte auf:

| | B1a | B1b | B2a | B2b |
|---|---|---|---|---|
| Aminzahl (mg KOH/g) | 132 | 88 | 68 | 93 |
| Hydroxylzahl (mg KOH/g) | 395 | 352 | 136 | 186 |
| Polyethylenglykolanteil (Gew.-%) ca. | 70 | 30 | 60 | 55 |
| Molmasse M ber. | 850 | 1274 | 1646 | 1202 |

Beispiel 1: Aus 85 Tlen (Festharz) der Komponente (A1) wird nach Zusatz von 45 mMol Ameisensäure/100 g Festharz und Verdünnen mit deionisiertem Wasser eine 40%ige Emulsion hergestellt. Zu dieser Emulsion werden bei 40°C 15 Tle der Komponente (B1b) zugesetzt. Die basischen Gruppen dieser Komponente werden vor der Zugabe nicht neutralisiert. Die Mischung wird anschließend 2 Stunden ohne weitere Wärmezufuhr gerührt. Das so homogenisierte Bindemittel wird mit Wasser auf einen Festkörpergehalt von 40 % eingestellt.

Beispiel 2 bis 5: In gleicher Weise wie im Beispiel 1 angegeben, werden weitere Bindemittelemulsionen hergestellt.

| Beispiel | 2 | 3 | 4 | 5 |
|---|---|---|---|---|
| Emulsionskomp. (A) | A 2 | A 2 | A 3 | A 4 |
| Tle Festharz | 80 | 95 | 90 | 90 |
| mMol HCOOH/100 g FH | 35 | 35 | 50 | 80 |
| Festkörpergehalt % | 50 | 50 | 35 | 40 |
| Komp. (B) | B 2a | B 1a | B 2b | B 1a |
| Tle Festharz | 20 | 5 | 10 | 10 |
| Zugabetemperatur, °C | 35 | 40 | 35 | 50 |
| Endfestkörpergehalt % | 45 | 40 | 35 | 40 |

### Prüfung der erfindungsgemäßen Beispiele und Vergleichsbeispiele

Die Bindemittelkombinationen werden mit deionisiertem Wasser auf einen Festkörpergehalt von 12 % verdünnt. Die Beschichtung wird auf zinkphosphatiertem Stahlblech (10 x 10 cm) unter Benutzung einer Graphitanode (Elektrodenflächenverhältnis 1 : 1, Elektrodenabstand 12 cm) unter ständigem Rühren bei der für die einzelnen Kombinationen ermittelten Optimalspannung (90 % der Durchbruchsspannung) durchgeführt. Die Badtemperatur wird auf 28 ± 1°C gehalten, die Beschichtungsdauer beträgt 2 Minuten. Beurteilt wird die Schichtstärke des 20 Minuten bei 170°C eingebrannten Lackfilms sowie dessen Oberflächenqualität (1 = einwandfrei glatt, 2 = leicht wellig, 3 = wellig, 4 = rauh).

Bei den Vergleichsbeispielen wurden die kationischen Bindemittel (Komponente A) ohne erfindungsgemäße Zusatzkomponente in gleicher Weise abgeschieden.

Die Abscheidungsspannung, die erzielte Schichtstärke, sowie die Beurteilung der Oberfläche für die Beispiele 1 bis 5, sowie die Vergleichsbeispiele unter Benützung der Komponenten A 1 bis A 4 sind in der nachfolgenden Tabelle 1 zusammengefaßt.

**Tab. 1**

| Beispiel | Abscheidungsspannung (Volt) | Schichtstärke (µm) | Oberfläche |
|---|---|---|---|
| 1 | 330 | 42 | 2 |
| 2 | 330 | 48 | 1 |
| 3 | 360 | 30 | 1 |
| 4 | 240 | 32 | 2 |
| 5 | 200 | 19 | 2 |
| A 1 | 300 | 25 | 2 |
| A 2 | 340 | 22 | 2 |
| A 3 | 210 | 15 | 3 |
| A 4 | 160 | 14 | 4 |

## Patentansprüche (Patentansprüche für folgende(n) Vertragsstaat(en): BE, DE, FR, GB, IT, NL, SE)

1. Bindemittelkombinationen für kathodisch abscheidbare Lacke, bestehend aus
(A) 80 bis 97 Gew.-%, vorzugsweise 85 bis 95 Gew.-%, eines kationischen, nach Protonierung wasserverdünnbaren, filmbildenden Harzes und
(B) 3 bis 20 Gew.-%, vorzugsweise 5 bis 15 Gew.-%, einer polyethermodifizierten Aminoverbindung, die durch
(B1) Umsetzung einer aliphatische Polyethersegmente enthaltenden Diepoxidverbindung mit mindestens 1 Mol eines primären oder sekundären Alkanolamins oder
(B2) Umsetzung von n Mol eines aliphatischen Polyetherdiols mit n+1 Mol eines Diisocyanates und 2 mol eines Trialkanolamins erhalten wurde,
mit der Maßgabe, daß die Komponente (B) einen Anteil an Polyethersegmenten von mindestens 20 Gew.-%, vorzugsweise von 30 bis 80 Gew.-%, enthält und eine Aminzahl von 50 bis 180 mg KOH/g, eine Hydroxylzahl von 100 bis 650 mg KOH/g und ein mittleres Molekulargewicht von 500 bis 2000 aufweist.

2. Bindemittelkombinationen nach Anspruch 1, dadurch gekennzeichnet, daß die Komponente (B 1) durch Umsetzung eines Polyglykoletherdiepoxids, welches gegebenenfalls kettenverlängert und/oder teilweise defunktionalisiert sein kann, mit einem sekundären Alkanolamin erhalten wurde.

3. Bindemittelkombinationen nach Anspruch 1, dadurch gekennzeichnet, daß die Komponente (B 2) durch Umsetzung eines Polyalkylenglykols mit dem Diisocyanat und dem Trialkanolamin erhalten wurde.

## Patentansprüche (Patentansprüche für folgende(n) Vertragsstaat(en): ES)

1. Verfahren zur Herstellung von Bindemittelkombinationen für kathodisch abscheidbare Lacke, dadurch gekennzeichnet, daß man
(A) 80 bis 97 Gew.-%, vorzugsweise 85 bis 95 Gew.-%, eines kationischen, nach Protonierung wasserverdünnbaren, filmbildenden Harzes
mit
(B) 3 bis 20 Gew.-%, vorzugsweise 5 bis 15 Gew.-%, einer polyethermodifizierten Aminoverbindung, die durch
(B1) Umsetzung einer aliphatische Polyethersegmente enthaltenden Diepoxidverbindung mit mindestens 1 Mol eines primären oder sekundären Alkanolamins oder
(B2) Umsetzung von n Mol eines aliphatischen Polyetherdiols mit n+1 Mol eines Diisocyanats und 2 Mol eines Trialkanolamins erhalten wurde,
kombiniert, mit der Maßgabe, daß die Komponente (B) einen Anteil an Polyethersegmenten von mindestens 20 Gew.-%, vorzugsweise von 30 bis 80 Gew.-%, enthält und eine Aminzahl von 50 bis 180 mg KOH/g, eine Hydroxylzahl von 100 bis 650 KOH/g und ein mittleres Molekulargewicht von 500 bis 2000 aufweist.

2. Verfahren nach Anspruch 1, dadurch gekennzeichnet, daß man als Komponente (B1) ein Umsetzungsprodukt aus einem Polyglykoletherdiepoxid, welches gegebenenfalls kettenverlängert und/oder teilweise defunktionalisiert sein kann, mit einem sekundären Alkanolamin, einsetzt.

3. Verfahren nach Anspruch 1, dadurch gekennzeichnet, daß man als Komponente (B2) ein Umsetzungsprodukt aus einem Polyalkylenglykol, dem Diisocyanat und dem Trialkanolamin einsetzt.

## Claims (Claims for the following Contracting State(s): BE, DE, FR, GB, IT, NL, SE)

1. Binder combinations for cathodically depositable paints, which combinations consist of
(A) 80 to 97 % by weight, preferably 85 to 95 % by weight, of a cationic, film-forming resin which is water thinnable after protonization and
(B) 3 to 20 % by weight, preferably 5 to 15 % by weight, of a polyether-modified amino compound which was obtained by
(B1) reacting a diepoxide compound containing aliphatic polyether segments with at least 1 mol of a primary or secondary alkanolamine or
(B2) by reacting n mol of an aliphatic polyether diol with n+1 mol of a diisocyanate and 2 mol of a trialkanolamine,
with the proviso that the component (B) contains at least 20 % by weight, preferably 30 to 80 % by weight, of polyether segments and has an amine value of 50 to 180 mg of KOH/g, a hydroxyl value of 100 to 650 mg of KOH/g and an average molecular weight of 500 to 2000.

2. Binder combinations according to Claim 1, characterized in that the component (B1) was obtained by reacting a polyglycol ether diepoxide whose chain may be lengthened, if desired, and/or partially stripped of its reactive groups, with a secondary alkanolamine.

3. Binder combinations according to Claim 1, characterized in that the component (B2) was obtained by reacting a polyalkylene glycol with the diisocyanate and the trialkanolamine.

## Claims (Claims for the following Contracting State(s): ES)

1. Process for preparing binder combinations for cathodically depositable paints, characterized in that
(A) 80 to 97 % by weight, preferably 85 to 95 % by weight, of a cationic, film-forming resin which is water thinnable after protonization is combined with
(B) 3 to 20 % by weight, preferably 5 to 15 % by weight, of a polyether-modified amino compound which was obtained by
(B1) reacting a diepoxide compound containing aliphatic polyether segments with at least 1 mol of a primary or secondary alkanolamine or
(B2) by reacting n mol of an aliphatic polyether diol with n+1 mol of a diisocyanate and 2 mol of a trialkanolamine,
with the proviso that the component (B) contains at least 20 % by weight, preferably 30 to 80 % by weight, of polyether segments and has an amine value of 50 to 180 mg of KOH/g, a hydroxyl value of 100 to 650 mg of KOH/g and an average molecular weight of 500 to 2000.

2. Process according to Claim 1, characterized in that the component (B1) is a reaction product of a polyglycol ether diepoxide whose chain may be lengthened, if desired, and/or partially stripped of its reactive groups, with a secondary alkanolamine.

3. Process according to Claim 1, characterized in that the component (B2) is a reaction product of a polyalkylene glycol with the diisocyanate and the trialkanolamine.

## Revendications (Revendications pour l'(les) Etat(s) contractant(s) suivant(s): BE, DE, FR, GB, IT, NL, SE)

1. Combinaisons de liants pour peintures déposables à la cathode, constituées par
(A) 80 à 97 % en poids, et de préférence 85 à 95 % en poids d'une résine filmogène cationique pouvant être dilué dans l'eau après protonation et
(B) 3 à 20 % en poids, et de préférence 5 à 15 % en poids d'un composé aminé polyéther-modifié qui a été obtenu par
(B1) transformation de segments de polyéther aliphatique contenant un composé diépoxy avec au moins 1 mole d'une alcanolamine primaire ou secondaire, ou
(B2) transformation de n moles d'un polyétherdiol aliphatique avec n + 1 moles d'un diisocyanate et 2 moles d'une trialcanolamine,
avec cette condition que le composant (B) contienne une fraction de segments de polyéther d'au moins 20 % en poids et de préférence comprise entre 30 et 80 % en poids, et présente un indice d'amine de 50 à 180 mg de KOH/g, un indice d'hydroxyle de 100 à 650 mg de KOH/g et un poids moléculaire moyen de 500 à 2000.

2. Combinaisons de liants selon la revendication 1, caractérisées en ce que le composant (B 1) est obtenu par transformation d'un polyglycolétherdiépoxyde dont la chaîne peut être éventuellement prolongée et/ou qui peut être partiellement défonctionnalisé, avec une alcanolamine secondaire.

3. Combinaisons de liants selon la revendication 1, caractérisées en ce que le composant (B 2) a été obtenu par transformation d'un polyalkylèneglycol avec le diisocyanate et la trialcanolamine.

## Revendications (Revendications pour l'(les) Etat(s) contractant(s) suivant(s): ES)

1. Procédé pour la préparation de combinaisons de liants pour peintures déposables à la cathode, caractérisé en ce qu'on combine
(A) de 80 à 97 % en poids et de préférence de 85 à 95 % en poids d'une résine cationique filmogène pouvant être diluée dans l'eau après protonation avec
(B) de 3 à 20 % en poids, et de préférence de 5 à 15 % en poids d'un composé aminé polyéther-modifié qui a été obtenu par
(B1) transformation de segments de polyéther aliphatiques contenant un composé diépoxy avec au moins 1 mole d'une alcanolamine primaire ou secondaire, ou
(B2) transformation de n moles d'un polyétherdiol aliphatique avec n + 1 moles d'un diisocyanate et 2 moles d'une trialcanolamine,
avec cette condition que le composant (B) contienne une fraction de segments de polyéther d'au moins 20 % en poids et de préférence comprise entre 30 et 80 % en poids, et présente un indice d'amine de 50 à 180 mg de KOH/g, un indice d'hydroxyle de 100 à 650 mg de KOH/g et un poids moléculaire moyen de 500 à 2000.

2. Procédé selon la revendication 1, caractérisé en ce qu'on utilise en tant que composant (B1) un produit de transformation à partir d'un polyglycolétherdiépoxyde, dont la chaîne peut être éventuellement allongée et/ou qui peut être partiellement défonctionnalisé, avec une alcanolamine secondaire.

3. Procédé selon la revendication 1, caractérisé en ce que l'on utilise en tant que composé (B2) un produit de transformation à partir d'un polyalkylèneglycol, le diisocyanate et la trialcanolamine.
